# DEMANDE DE BREVET EUROPEEN

(11) **EP 4 640 657 A1**
(43) Date de publication de la demande: **29.10.2025**
(21) Numéro de dépôt: 24171989.7
(22) Date de dépôt: 23.04.2024
(51) Int. Cl.: C04B 41/50, C04B 41/00, C04B 41/52, C04B 41/86, C04B 41/89, C04B 41/91, G04B 45/00, C23D 5/06, C04B 111/00

(54) **ARTICLE AVEC UN DÉCOR EN ÉMAIL PLIQUE-À-JOUR ET SON PROCÉDÉ DE FABRICATION**

(71) Demandeur: Comadur S.A., 2400 Le Locle (CH)
(72) Inventeur: ROMAND, Johan, 25620 Mamirolle (FR)
(74) Mandataire: ICB SA

(57) **Abrégé**

L'invention concerne un procédé de fabrication d'un article (1) comprenant un décor débouchant (2) rempli avec un émail (3) pour former un émail dit plique-à-jour, le procédé comprenant les étapes de :
- Mise à disposition d'une ébauche (5) définie avec une face supérieure (5a) et avec une face inférieure (5b) opposée à la face supérieure (5a) ;
- Ablation d'une partie de l'ébauche (5) au niveau de la face supérieure (5a) pour réaliser un décor qui est non débouchant (2a) sur la face inférieure (5b) ou, en alternative, à l'étape précédente, mise à disposition de ladite ébauche (5) directement munie du décor non débouchant (2a) ;
- Dépôt d'une ou plusieurs couches d'émail (3) au sein du décor non débouchant (2a) et cuisson de l'émail (3) après chaque dépôt de couche ;
- Usinage, de préférence par meulage, de la face inférieure (5b) pour révéler l'émail (3) et ainsi réaliser l'article (1) avec le décor débouchant (2) rempli d'émail (3).

## Description

### Domaine technique de l'invention

L'invention concerne un procédé de fabrication d'un article avec un décor en émail plique-à-jour. Le procédé selon l'invention permet de réaliser des grandes séries avec un coût réduit. L'invention se rapporte également à l'article issu de ce procédé.

### Arrière-plan technologique

Le plique-à-jour est une technique de mise en oeuvre de l'émail sur un substrat sans fond au niveau de l'émail. L'absence de fond permet à la lumière de filtrer à travers l'émail transparent ou translucide. L'effet rendu est ainsi celui d'un vitrail miniature.

La technique de dépose traditionnelle du plique-à-jour consiste à créer des cloisons soudées avec un métal qui reste stable lors de la cuisson de l'émail. Lors des cuissons successives des couches déposées une à une, les cloisons métalliques, principalement en or jaune ou blanc pour leurs propriétés, peuvent se déformer, voire se désolidariser du substrat, ce qui limite grandement le nombre de passages au four et les designs réalisables.

En outre, un substrat est nécessaire lors de la dépose et de la cuisson pour que l'émail ne coule pas en dehors de sa cloison. Les substrats étant en quartz, il est très difficile de réaliser cette opération sur des formes non planes. Par ailleurs, l'émail traditionnel est déposé à la main, au pinceau ou avec un pique-huile. Les couches déposées par ces moyens sont très fines, ce qui nécessite de déposer des dizaines de couches pour arriver à une épaisseur totale qui est généralement inférieure à 0.5 mm. L'émail ainsi obtenu de, par sa faible épaisseur, est assez fragile.

Cette technique étant fastidieuse et peu reproductible, les pièces horlogères avec un cadran plique-à-jour sont des pièces uniques ou réalisées dans des séries ultra limitées avec un coût exorbitant. A ce jour, le manque de répétabilité de cette technique de dépose empêche les marques horlogères de produire des pièces en série.

### Résumé de l'invention

La présente invention vise à pallier les manquements précités en proposant un procédé de fabrication permettant de réaliser des pièces avec un décor en émail plique-à-jour en grande série pour un coût restreint et ce avec une robustesse de l'émail accrue.

A cet effet, il est proposé un procédé de fabrication d'un article comprenant un décor débouchant rempli avec un émail pour former un émail dit plique-à-jour, le procédé comprenant les étapes de :
- Mise à disposition d'une ébauche définie avec une face supérieure et avec une face inférieure opposée à la face supérieure ;
- Ablation d'une partie de l'ébauche au niveau de la face supérieure pour réaliser un décor qui est non débouchant sur la face inférieure ou, en alternative, à l'étape précédente, mise à disposition de ladite ébauche directement munie du décor non débouchant ;
- Dépôt d'une ou plusieurs couches d'émail au sein du décor non débouchant et cuisson de l'émail après chaque dépôt de couche ;
- Usinage, de préférence par meulage, de la face inférieure pour révéler l'émail et ainsi réaliser l'article avec le décor débouchant rempli d'émail.

De préférence, le décor débouchant est ensuite poli.

Ce procédé est très reproductible et permet des grands volumes de production pour des coûts très limités. Les formes complexes sont seulement limitées par la résistance des matériaux du substrat lors de la cuisson ou des chocs.

Ce procédé permet de déposer des couches épaisses d'émail, ce qui permet d'obtenir un émail avec une épaisseur totale supérieure ou égale à 0.5 mm avec un nombre limité de couches, typiquement inférieur à 10. Cette épaisseur plus importante de l'émail par rapport à celle des émaux de l'art antérieur permet de réduire sa fragilité, et par là-même de réaliser des composants d'habillage extérieur, tels que des lunettes, qui sont soumis à de fortes sollicitations.

De manière plus générale, l'utilisation de l'émail plutôt que de laques permet d'avoir une excellente résistance chimique et mécanique contrairement aux lunettes laquées standards. L'émail fait aussi partie des matières considérées comme nobles dans l'horlogerie et la joaillerie contrairement aux laques.

L'invention repose aussi sur la capacité à venir meuler le substrat et l'émail en même temps tout en garantissant un état de surface optimal sur les deux matériaux. Le polissage de l'émail permet aussi de ne pas repasser la pièce au four pour lui donner son aspect brillant et translucide final.

Le décor en émail transparent va créer une profondeur qu'il n'est aujourd'hui pas possible d'obtenir. Il est en outre possible de réaliser un usinage incliné pour faire un dégradé translucide-opaque. Il est également possible de déposer un dégradé de couleurs, par exemple, par sprayage. Il est aussi possible de cumuler facilement des terminaisons sur le substrat comme, par exemple, un satinage ou une texturation laser.

### Brève description des figures

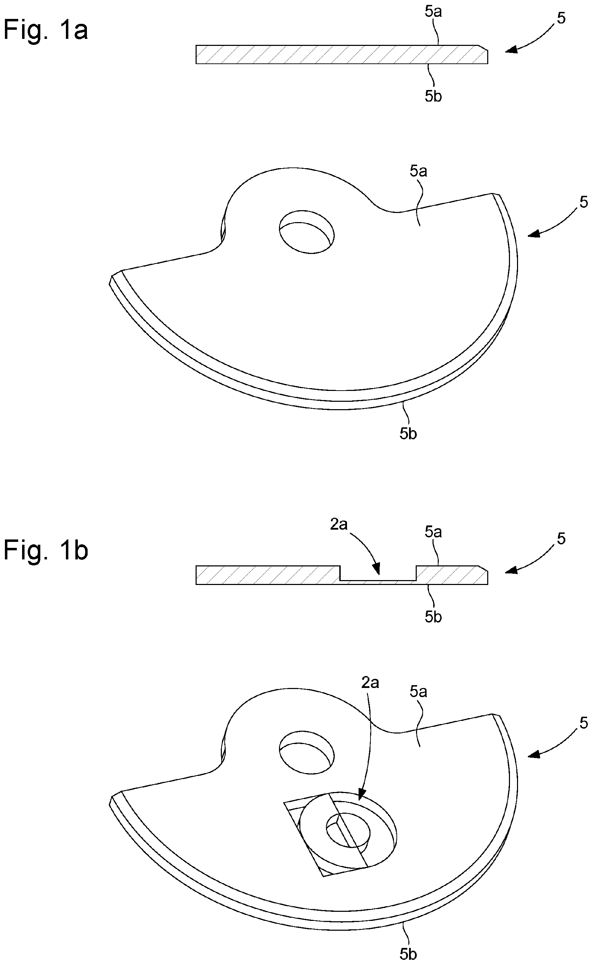

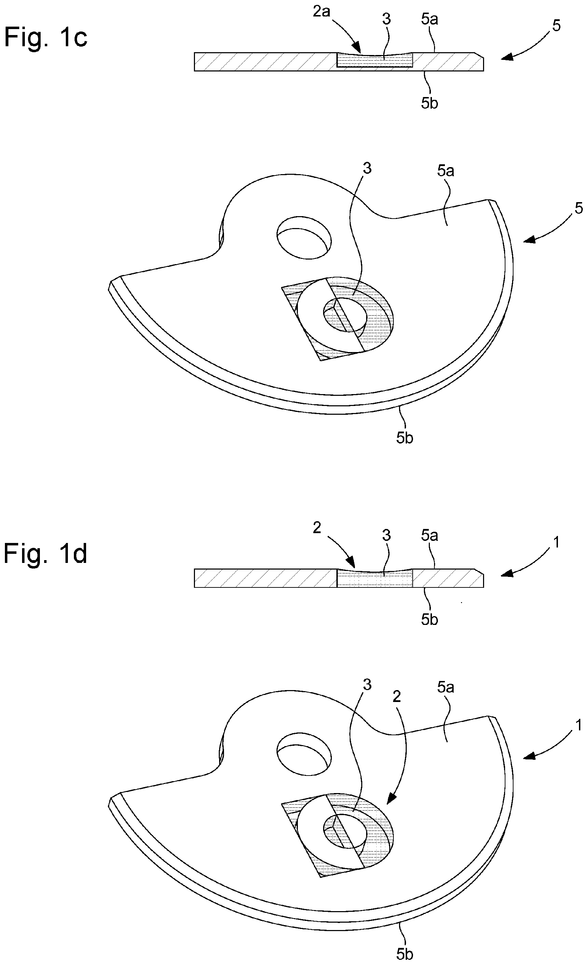

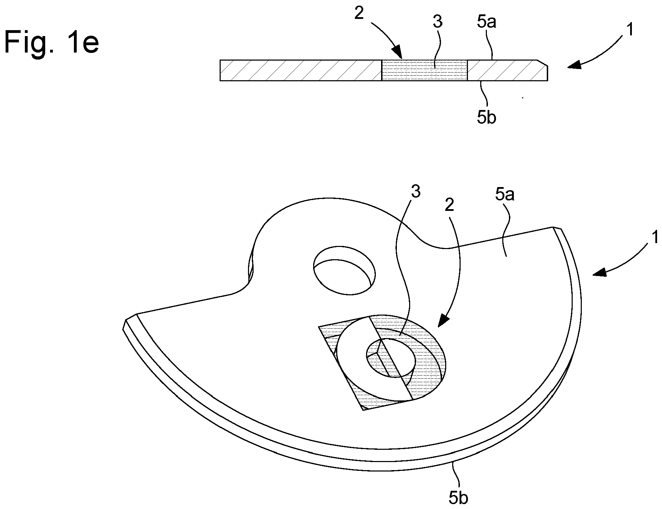

Les figures 1a à 1e représentent les 5 étapes du procédé selon l'invention. Pour chaque figure, une vue schématique en coupe d'une partie de l'article ou de l'ébauche et une vue tridimensionnelle d'une partie de l'article ou de l'ébauche sont représentées.

### Description détaillée de l'invention

L'invention concerne un procédé de fabrication d'un article avec un décor en émail plique-à-jour. L'article peut, à titre d'exemple, être un composant horloger. Il peut plus spécifiquement s'agir d'un composant d'habillage choisi parmi la liste non exhaustive comprenant une carrure, un fond, une lunette, une couronne, un poussoir, un maillon de bracelet, un bracelet, une boucle ardillon, un fermoir, un cadran et une aiguille. Le procédé est particulièrement bien adapté pour réaliser des articles soumis à de fortes sollicitations tels qu'un composant d'habillage extérieur. Il peut également s'agir d'un composant du mouvement tel qu'une masse oscillante. Ci-après, l'invention sera plus spécifiquement décrite pour une masse oscillante.

Le procédé de fabrication est adapté pour tout substrat ayant un point de fusion plus élevé que celui de la température de cuisson de l'émail qui est typiquement comprise entre 650°C et 1100°C selon la composition de l'émail. Le procédé est particulièrement bien adapté pour un substrat en matériau dur comme de la céramique telle que du nitrure de silicium, de l'oxyde de zirconium ou de l'oxyde d'aluminium, comme un saphir ou encore comme un cermet. Certains céramiques, particulièrement le ZrO₂, ont une excellente adhérence mécano-chimique avec l'émail, et leurs coefficients de dilatation sont très proches, ainsi l'article ajouré conserve une excellente résistance mécanique. Ces matériaux supportent bien les cycles de cuisson pouvant aller jusqu'à plus de 1000°C, pour de l'émail grand feu par exemple, et résistent aux chocs thermiques pour effectuer des cycles de cuisson rapides.

Le procédé est illustré aux figures 1a à 1e en 5 étapes de a) à e) pour une masse oscillante. Dans une première étape a), l'article sans décor, qu'on qualifiera d'ébauche 5 ou de substrat, est mis à disposition. L'ébauche 5 est définie avec une face supérieure 5a et avec une face inférieure 5b opposée à la face supérieure 5a. La face supérieure pourra indifféremment être la face destinée à être tournée vers l'observateur en utilisation ou la face opposée. Dans une deuxième étape b), un décor non débouchant 2a est réalisé depuis la face supérieure 5a. Le décor non débouchant peut, par exemple, être réalisé par ablation laser. Eventuellement, cette étape b) peut être omise avec dans l'étape a) une ébauche munie du décor non débouchant 2a mise directement à disposition, cette ébauche étant, par exemple, réalisée par injection. Dans une troisième étape c), l'émail 3 est déposé au sein du décor non débouchant 2a. Idéalement, le dépôt est réalisé par sprayage liquide en vue d'une réalisation industrielle. En variante, il peut s'agir d'une dépose manuelle rapide au pinceau ou d'une dépose par saupoudrage d'une poudre. L'ébauche 5 est ensuite cuite pour vitrifier l'émail déposé. Préférablement, plusieurs couches d'émail sont déposées avec, après chaque étape de dépôt, un cycle de cuisson de manière à garantir l'absence de bulles dans l'émail. Il est envisageable de déposer des couches d'émail de couleurs différentes et/ou de faire varier la couleur de l'émail déposé pour chaque couche. Le nombre de couches d'émail déposées est typiquement compris entre 2 et 15, de préférence entre 3 et 10, pour une épaisseur totale supérieure ou égale à 0.5 mm, de préférence supérieure ou égale à 0.8 mm. L'épaisseur totale maximale pourra aller jusqu'à des valeurs de 1.5 mm, l'épaisseur maximale étant seulement limitée par les temps de production. Il y a ensuite une quatrième étape d) d'usinage, de préférence par meulage, de la face inférieure 5b de l'ébauche 5 pour révéler l'émail 3. On obtient ainsi le décor débouchant 2. Ensuite, de préférence, il y a un polissage final pour rendre la surface meulée parfaitement brillante et garantir la bonne transparence de l'émail. Optionnellement, il est également possible dans une étape e) d'usiner par meulage la face supérieure 5a pour obtenir un décor émaillé parfaitement à fleur avec le substrat. De nouveau, cet usinage peut être complété par un polissage. Dans le cas d'une pièce plate, le meulage et le polissage du dessus et du dessous peuvent être réalisés en une seule opération grâce aux machines à lapider satellitaire. Selon l'invention, la face supérieure et/ou la face inférieure peuvent être usinées selon un plan incliné pour avoir un dégradé translucide-opaque si la couche d'émail présente un aspect opaque avant usinage. On précisera que l'aspect opaque, transparent ou translucide sera dicté par la présence plus ou moins importante de pigments au sein de l'émail et par l'épaisseur de la couche.

Optionnellement, une des faces ou les deux faces peuvent être soumises à des traitements de finition tels que du satinage ou une texturation laser.

## Revendications

1. Procédé de fabrication d'un article (1) comprenant un décor débouchant (2) rempli avec un émail (3) pour former un émail dit plique-à-jour, le procédé comprenant les étapes de :
- Mise à disposition d'une ébauche (5) définie avec une face supérieure (5a) et avec une face inférieure (5b) opposée à la face supérieure (5a) ;
- Ablation d'une partie de l'ébauche (5) au niveau de la face supérieure (5a) pour réaliser un décor qui est non débouchant (2a) sur la face inférieure (5b) ou, en alternative, à l'étape précédente, mise à disposition de ladite ébauche (5) directement munie du décor non débouchant (2a) ;
- Dépôt d'une ou plusieurs couches d'émail (3) au sein du décor non débouchant (2a) et cuisson de l'émail (3) après chaque dépôt de couche ;
- Usinage, de préférence par meulage, de la face inférieure (5b) pour révéler l'émail (3) et ainsi réaliser l'article (1) avec le décor débouchant (2) rempli d'émail (3).

2. Procédé selon la revendication 1, comprenant, une autre étape d'usinage, de préférence par meulage, de l'émail (3) de la face supérieure (5a) pour obtenir un décor émaillé à fleur avec la face supérieure (5a), ladite autre étape pouvant être concomitante avec l'étape d'usinage de la face inférieure (5b).

3. Procédé selon la revendication 2, comprenant une étape de polissage de la face supérieure (5a) et/ou de la face inférieure (5b) à la suite de l'étape d'usinage et/ou de l'autre étape d'usinage.

4. Procédé selon l'une des revendications précédentes, dans lequel ladite ébauche (5) est réalisée dans un matériau ayant un point de fusion supérieur ou égal à 650°C.

5. Procédé selon l'une des revendications précédentes, dans lequel le dépôt d'une ou plusieurs couches d'émail (3) est réalisé par sprayage liquide, au pinceau ou par saupoudrage d'une poudre.

6. Procédé selon l'une des revendications précédentes, dans lequel le nombre de couches d'émail (3) déposées est compris entre 2 et 15, de préférence entre 3 et 10.

7. Procédé selon l'une des revendications précédentes, dans lequel lors de l'étape de dépôt d'une ou plusieurs couches d'émail (3), des couches d'émail (3) de couleurs différentes sont déposées et/ou la couleur au sein d'une même couche est modulée.

8. Procédé selon l'une des revendications 2 à 7, dans lequel l'émail (3) est usiné à l'étape d'usinage et/ou à l'autre étape d'usinage selon un plan incliné pour introduire un dégradé de zones plus ou moins transparentes.

9. Article (1) comprenant une face supérieure (5a) et une face inférieure (5b) opposée à la face supérieure (5a), ledit article (1) comprenant un décor débouchant (2) en émail plique-à-jour avec une épaisseur d'émail supérieure ou égale à 0.5 mm, de préférence supérieure ou égale à 0.8 mm.

10. Article (1) selon la revendication précédente, ledit article (1) étant un composant horloger d'habillage ou du mouvement.

11. Article (1) selon l'une des revendications 9 à 10, ledit article (1) étant un composant horloger d'habillage extérieur.

12. Article (1) selon l'une des revendications 9 à 11, ledit article (1) étant réalisé dans une céramique, un saphir ou un cermet.

13. Article (1) selon la revendication précédente, ledit article (1) étant réalisé dans de l'oxyde de zirconium.
